# EUROPEAN PATENT APPLICATION

(11) **EP 3 389 167 A1**
(43) Date of publication of application: **17.10.2018**
(21) Application number: 17166036.8
(22) Date of filing: 11.04.2017
(51) Int. Cl.: H02K 5/24, H02K 1/17

(54) **ELECTRIC MOTOR**

(71) Applicant: Mahle International GmbH, 70376 Stuttgart (DE)
(72) Inventor: BASA, Andrej, 5294 Dornberk (SI); FURLAN, Martin, 5271 Vipava (SI); PELJHAN, Borut, 5271 Vipava (SI)
(74) Representative: BRP Renaud & Partner mbB Rechtsanwälte Patentanwälte Steuerberater

(57) **Abstract**

The present invention relates to an electric motor (1), in particular for a motor vehicle (2), comprising an external stator (3), which is formed cylindrically on its radial outer side (6) and an internal rotor (4), which is arranged rotatably relative to the stator (3) about a rotation axis (5).

It is essential to the invention here that the stator (3) at least partially on its radial outer side (6) is directly in contact with a damping layer (7), the damping layer (7) surrounds the stator (3) on its outer side (6) in circumferential direction (8), and the damping layer (7) at least partially on its radial outer side (9) is directly in contact with a structure (10), which winds around the damping layer (7) in circumferential direction (8).

## Description

The present invention relates to an electric motor with the features of the introductory clause of Claim 1. In addition, the invention relates to an electric machine which has such an electric motor.

In the operation of electric motors, through various causes vibrations and noises occur, which it is desirable to minimize. The vibrations or respectively oscillations and noises of such an electric motor are due to a range of different forces which occur during operation. Essentially, electromagnetic forces and mechanical forces occur. The electromagnetic forces, which generate oscillations, concern harmonic oscillations, which are brought about essentially through rotation of the rotor. Included in the mechanical forces which can occur during the operation of electric motors are, for example, oscillations transferred to the shaft by ball bearings, and/or imbalances of the individual components of the electric motor, which occur through a generally unavoidable manufacturing inaccuracy. To reduce such vibrations and noises, on the one hand the excitation forces during the operation of the electric motor can be reduced, wherein from the present-day point of view it does not appear possible to eliminate these completely, or on the other hand to increase the strength or respectively the damping characteristics of the electric motor advantageously accordingly. The increase of the strength or respectively rigidity of the parts or subassemblies from which the electric motor is composed, can lead to an effective reduction of vibrations and noises for the case where the rotation speed or respectively the motor frequency is relatively constant. In the case of a variable rotation speed or respectively motor frequencies, on the other hand, it is only possible with difficulty to keep the changing magnetic and mechanical forces away from resonance bodies which are connected with the electric motor, and also from the electric motor as such.

As is known, the damping of the structure of the electric motor represents the sometimes most trivial solution. The damping can be achieved in that in particular components of the electric motor, which are subjected to an elevated degree to vibrations, are produced from materials which per se have a high self-damping characteristic. It is a problem involved with the exchange or respectively with a change of the component materials of the electric motor, that such component materials are also to satisfy other requirements, such as for example a suitable rigidity or respectively strength, a loading capacity suited to requirements, a corresponding temperature resistance and an advantageous magnetic characteristic.

Derived herefrom, the idea according to the invention, in order to reduce vibrations and noises during operation of electric motors, refers to additionally applied or respectively arranged damping elements on the electric motor. The known prior art in this respect is explained in further detail below.

From US 3 546 504 A and DE 1 613 282 A1 an arrangement is known for preventing resonance oscillations of individual components, occurring as a result of electromagnetic and/or mechanically stimulated oscillation, and for preventing the air-borne and structure-borne noise emission of individual components of an electric micro-motor of elongated construction, without a casing. All construction elements of the motor, which merely carry out a supporting or cohesive function and which either oscillate themselves or else can be stimulated to resonate or respectively to resonance oscillations through the oscillations occurring during the operation of the motor, are formed from a material with an extremely high self-damping. In addition, it can be seen from the applications that those parts of the motor which for mechanical or electrical reasons are only able to be produced from a material having low self-damping and from which oscillations originate, are separated from the adjacent components by a layer consisting of oscillationdamping material.

From US 0 001 864 H1 a method is known, wherein for the damping of cylindrical components of any type a damping strip comes into use. The damping strip is formed from a viscoelastic internal layer on the one hand and, on the other hand, from an external metallic layer having a higher strength compared to the internal layer.

From US 4 860 851 A a substrate is known for an acoustic damping for general tubular bodies. The substrate comprises here at least a first damping layer of a viscoelastic material, which is distinguished by a defined tan delta value, which represents a damping value and refers to a temperature in relation to a frequency of the material. In addition, the substrate can comprise a second layer, which has a lower tan delta value.

A disadvantage in the current prior art is that with regard to electric motors, the focus is directed to the damping of bearings and to the damping of the shaft. For the case where the magnetic forces in the electric motor are more strongly marked than the mechanical forces and therefore are to be designated as dominant forces, it is in particular necessary to explicitly damp the stator sufficiently.

The present invention is concerned with the problem of indicating, for an electric motor of the type described above or respectively for a combination equipped therewith, an improved or at least a different embodiment, which is distinguished in particular by a reduction of vibrations and noises and in particular is able to be produced in a cost-efficient manner by a simple manufacture.

This problem is solved according to the invention by the subject of the independent claims. Advantageous embodiments are the subject of the dependent claims.

The invention is based on the general idea of providing an electric motor, which has a cylindrically formed external stator, at least partially on a radial outer side of the stator with a damping layer, which is wound around at least partially on its radial outer side with a structure in circumferential direction. Through the arrangement of such a damping layer, which is wound around by a structure externally on the stator of the electric motor, oscillations in the form of vibrations and noises, which are brought about by electromagnetic and mechanical influencing factors, can be significantly reduced. The oscillation amplitudes are weakened owing to the material characteristics of the material of the damping layer, so that the oscillations on the one hand cannot be transferred, or can only be transferred in a greatly reduced manner, to other resonance bodies and, on the other hand, the electric motor as such undergoes a self-damping. Through the relatively simple application of the damping layer and of the structure onto the stator of the electric motor, it is possible from a production-oriented point of view to provide the stator as individual component with the invention, to form a completely composed electric motor with the invention, or else to equip already older electric motors with the technology according to the invention.

For this, the electric motor, in particular for a motor vehicle, comprises an external stator, which is formed cylindrically on its radial outer side, and an internal rotor, which is arranged rotatably relative to the stator about a rotation axis. The stator is at least partially in contact on its radial outer side directly with a damping layer, wherein the damping layer surrounds the stator, on its outer side, in circumferential direction. The damping layer is at least partially in contact on its radial outer side directly with a structure which winds around the damping layer in circumferential direction.

In an advantageous embodiment variant of the idea according to the invention, the radial outer side of the stator has at least one longitudinal portion in axial direction, which is surrounded by such a damping layer. In addition, such a longitudinal portion is wound on the radial outer side of the damping layer in axial direction by the structure.

In another advantageous embodiment variant, the damping layer extends in axial direction, substantially over the entire radial outer side of the stator, wherein preferably the structure also extends in axial direction, substantially over the entire radial outer side of the damping layer. In addition, it is conceivable that the damping layer extends in axial direction over the entire radial outer side of the stator and the structure is arranged only partially, in axial longitudinal portions, on the radial outer side of the damping layer.

In a preferred embodiment, the damping layer has a material with a higher self-damping characteristic compared to the material of the stator, in particular a greater logarithmic decrement. The damping layer is particularly preferably formed from a viscoelastic material, in particular from a plastic. In addition, this invention includes the idea that the damping layer has several layers, which are formed from different viscoelastic materials, and these layers are connected with one another in a sandwich-like manner.

In a further preferred embodiment, the structure is formed by at least one winding which is arranged or respectively wound on the radial outer side of the damping layer. Particularly preferably, the structure has several windings, so that a fixing of the damping layer onto the radial outer side of the stator is guaranteed. Expediently, the structure is configured such that a winding number, a cross section size of the wire or strip and a prestressing of the winding are selected relative to a geometric dimension and to an oscillation behaviour of the electric motor. It is likewise expedient that the structure is configured such that it is wound securely on the damping layer, so that the damping layer is prestressed radially on the stator. A direct contact between the damping layer and the radial outer side of the stator is essentially necessary, in order to direct into the damping layer oscillations which originate from the electric motor. In other words, it is the purpose of the invention that the oscillations in the form of vibrations and noises are transferred from the fixed components of the electric motor into the viscoelastic material of the damping layer.

Expediently, the structure is formed from a material with a greater strength compared to the damping layer or respectively with a lower self-damping characteristic, in particular from a metallic material. In addition, the material of the structure is preferably plastically deformable, so that a winding around of the radial outer side of the damping layer is guaranteed.

In advantageous embodiments, the structure is embodied either as a metallic wire, with a circular cross-section, wound around the damping layer, or as a metallic strip, with a rectangular or square cross-section, wound around the damping layer. It should be said that all conceivable geometric cross-sectional shapes which such a structure can have are protected within the scope of this invention.

In a further advantageous embodiment, the winding of the structure is configured having a single layer, that means that all the individual windings of the structure lie radially to the radial outer side of the stator in one plane. It is preferred that the individual windings of the structure are axially directly in contact with one another. In addition, it is conceivable that the individual windings of the structure are arranged axially spaced apart from one another.

In a further embodiment, the radial outer side of the stator is formed by a housing acting as a yoke. The housing acting as a yoke surrounds the external stator in circumferential direction. In addition, the yoke forms at least partially the external stator of the electric motor.

In a preferred embodiment, an electric machine according to the invention, in particular for a motor vehicle, is equipped with such an electric motor.

Further important features and advantages of the invention will emerge from the subclaims, from the drawings and from the associated figure description with the aid of the drawings.

It shall be understood that the features mentioned above and to be explained further below are able to be used not only in the respectively indicated combination, but also in other combinations or in isolation, without departing from the scope of the present invention.

Preferred example embodiments of the invention are illustrated in the drawings and are explained in further detail in the following description, wherein the same reference numbers refer to identical or similar or functionally identical components.

There are shown, respectively diagrammatically,
- Fig. 1: a sectional illustration of an electric motor with a damping layer arranged on a radial outer side of a stator, said damper layer being wound around by a structure,
- Fig. 2: an isometric schematic diagram of the external stator of the electric motor according to the invention,
- Fig. 3 - 5: respectively an isometric illustration of the electric motor in different embodiment variants with respect to the axial extent of the damping layer and of the wound-around structure,
- Fig. 6 - 7: respectively a sectional illustration in the region of the stator, of the damping layer and of the structure in different embodiment variants.

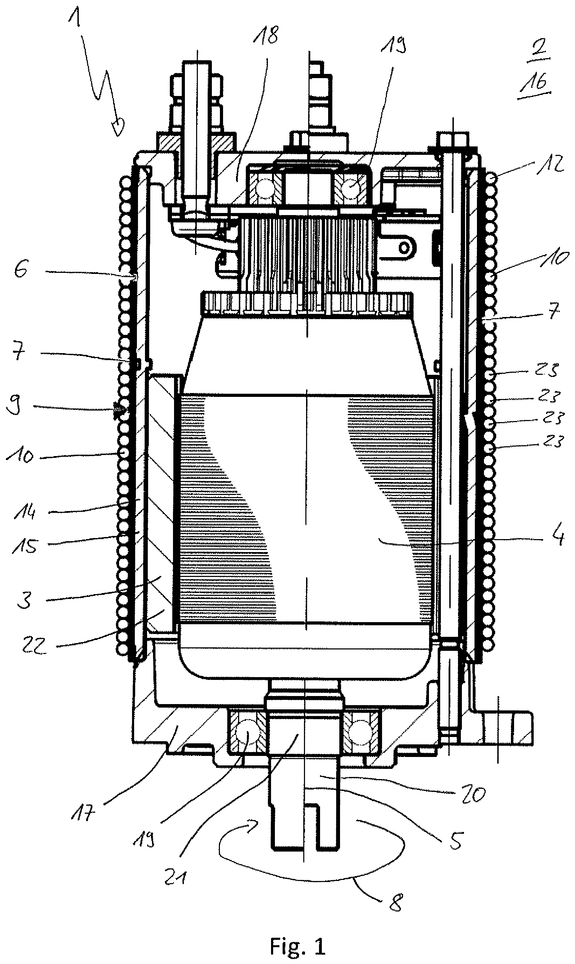

Figure 1 shows a sectional illustration of an electric motor 1, in particular for a motor vehicle 2 which is not shown, with an external stator 3, which is formed cylindrically on its radial outer side 6. The electric motor 1 has an internal rotor 4, which is arranged rotatably relative to the stator 3 about a rotation axis 5. In axial direction, the electric motor 1 is delimited on both sides by end shields 17, 18. These end shields 17, 18 can also be named as bearing bracket. At least on an axial longitudinal side such an end shield 17 has a concentric opening 21, through which a shaft 20 of the rotor 4 extends. On the end shield 17 a roller bearing 19 is arranged, which rotatably supports the shaft 20 of the rotor 4, concentrically to the rotation axis 5. On an opposite longitudinal side, the shaft 20 of the rotor 4, in the end shield 18 in a roller bearing 19, is mounted rotatably in rotation direction about the rotation axis 5. The stator 3 has a housing 15, acting as a yoke 14, which forms the radial outer side 6 of the stator 3. On a radial inner side of the stator 3, in effective direction to the internal rotor 4, a pole body 22 is arranged, which can be configured for example as a permanent magnet or as a pole shoe with an electromagnetic coil. On the radial outer side 6 of the stator 3 a damping layer 7 is arranged, which is in direct contact with the radial outer side 6 of the stator 3. The damping layer 7 surrounds the radial outer side 6 of the stator 3 in circumferential direction 8. On a radial outer side 9 of the damping layer 7 a structure 10 is arranged, which is in direct contact with the radial outer side 9 of the damping layer 7. The structure 10 winds around the radial outer side 9 of the damping layer 7 in circumferential direction 8.

The damping layer 7 has a material which has a higher self-damping characteristic, in particular a greater logarithmic decrement, compared to the material of the stator 3 or respectively compared to the material of the housing 15 acting as yoke 14. The damping layer 7 can be formed from a viscoelastic material, in particular from a plastic. In addition, the damping layer 7 can be formed by a spraying of the viscoelastic material onto the radial outer side 6 of the stator 3.

The damping layer 7 can have several layers, which are formed from different viscoelastic materials, with different material characteristics with respect to the oscillation behaviour thereof. The individual layers of the damping layer 7 can be connected with one another in a sandwich-like manner.

The structure 10 is formed by at least one winding 23, in circumferential direction 8 about the radial outer side 6 of the stator 3. The winding 23 or respectively windings 23 of the structure 10 is or respectively are in direct contact with the radial outer side 9 of the damping layer 7 and can to that effect guarantee a fixed positioning of the damping layer 7 on the stator 3. The structure 10 can be configured such that through a defined number of windings 23 and a defined intensity of a winding tension of the windings 23, a relative pre-stressing of the damping layer 7 is provided in radial direction to the radial outer side 6 of the stator 3. The influencing factors which are to be considered, by means of which the structure 10 is designed with regard to the number and the intensity of prestressing of the windings 23, are on the one hand the geometric dimensions of the electric motor 1 or respectively of the stator 3, and on the other hand the forces generated by the electric motor 1 with respect to the oscillation behaviour in the operating state.

To adhere to the problem according to the invention of the electric motor 1, the structure 10 can be formed from a material with a higher strength or respectively higher rigidity compared to the material of the damping layer 7 and with a lower self-damping characteristic. The material of the structure 10 can be or contain a metallic material.

The configuration of the structure 10 can be single-layered, which means that the individual windings 23 of the structure 10 lie radially in a plane on the radial outer side 9 of the damping layer 7, or else multi-layered, wherein an outer second layer of windings 23 of the structure 10 rests onto a first inner layer of windings 23 of the structure 10, which is in direct contact with the radial outer side 9 of the damping layer 7. The individual windings 23 of the structure 10 can be axially directly in contact with one another or arranged axially spaced apart from one another.

An electric machine 16, which is otherwise not shown, can be configured with such an electric motor 1, which can have the features explained above.

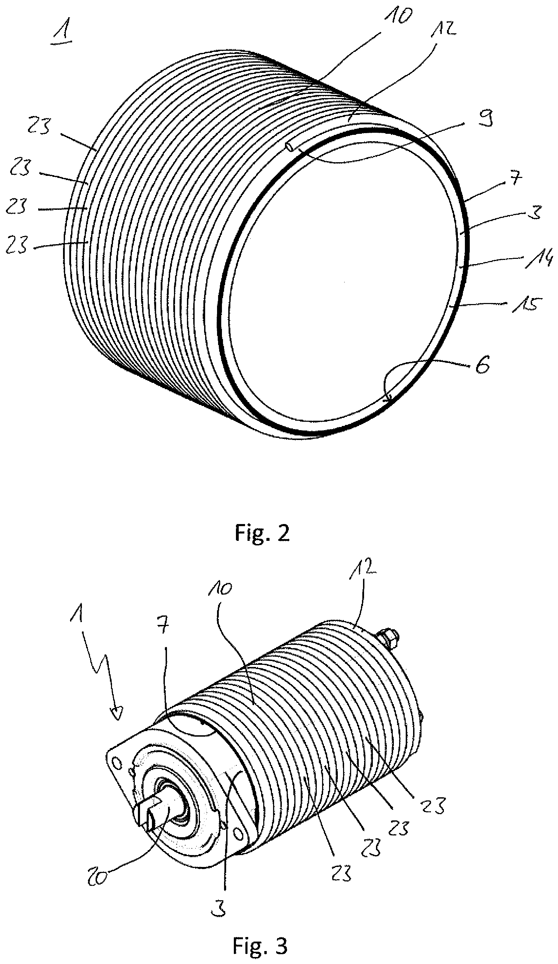

Fig. 2 shows an isometric schematic diagram of the external stator 3 of the electric motor 1 according to the invention, in which the damping layer 7, arranged on the radial outer side 6 of the stator 3, extends in axial direction, substantially over the entire radial outer side 6 of the stator 3. The structure 10 arranged on the radial outer side 9 of the damping layer 7 likewise extends in axial direction, substantially over the entire radial outer side 9 of the damping layer 7. The structure 10 is formed by a layer of windings 23 and extends from an axial longitudinal end of the stator 3 to the other axial longitudinal end of the stator 3. The configuration of the structure 10 can be realized by means of a metallic wire 12, by the latter being wound around the stator 3. For this, the metallic wire 12 is arranged displaced by an angle in axial direction, corresponding to the distance in circumferential direction 8, relative to the diameter of the wire 12, so that the individual windings 23 are axially in direct contact with one another.

Both the structure 10, in the form of the metallic wire 12, and also the damping layer 7 can be adapted according to the geometric dimensions of the electric motor 1, in particular those of the stator 3. In addition, the number of windings 23 of the structure 10 can likewise be designed relative to the oscillation behaviour of the electric motor 1. The radial prestressing with which the wire 12 of the structure 10 is wound around the damping layer 7 is in relationship to the contact pressure of the damping layer 7 onto the radial outer side 6 of the stator 3.

Fig. 3 to 5 show respectively isometric illustrations of the electric motor 1 in different embodiment variants with regard to the axial extent of the damping layer 7 and the wound-around structure 10.

In Fig. 3 an embodiment variant of the electric motor 1 is illustrated, in which the radial outer side 6 of the stator 3 is surrounded by the damping layer 7 over the entire axial length. The structure 10 winds around the damping layer 7 likewise over the entire axial length of the stator 3.

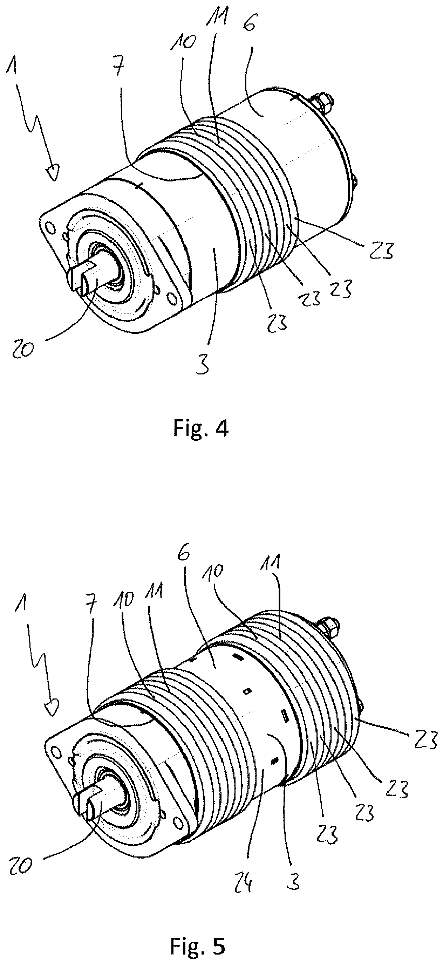

In Fig. 4 an embodiment variant of the electric motor 1 is illustrated, in which a longitudinal portion 11, which is surrounded by the damping layer 7, is arranged only in the central region of the radial outer side 6 of the stator 3. In this variant, the structure 10 is arranged only in the region of the longitudinal portion 11, therefore in the region of the damping layer 7, and therefore extends over the axial length of the damping layer 7 or respectively of the longitudinal portion 11 and not over the entire axial length of the stator 3.

In Fig. 5 an embodiment variant of the electric motor 1 is illustrated, in which, starting from the respective longitudinal ends of the stator 3, longitudinal portions 11 are arranged, in which, as previously described, the radial outer surface 6 of the stator 3 in the region of the longitudinal portion 11, is likewise surrounded by a damping layer 7 and wound around by a structure 10. The longitudinal portions 11 extend axially in the direction of a centre of the stator 3, wherein a longitudinal portion 24 which remains free delimits the longitudinal portions 11 towards the centre of the stator 3.

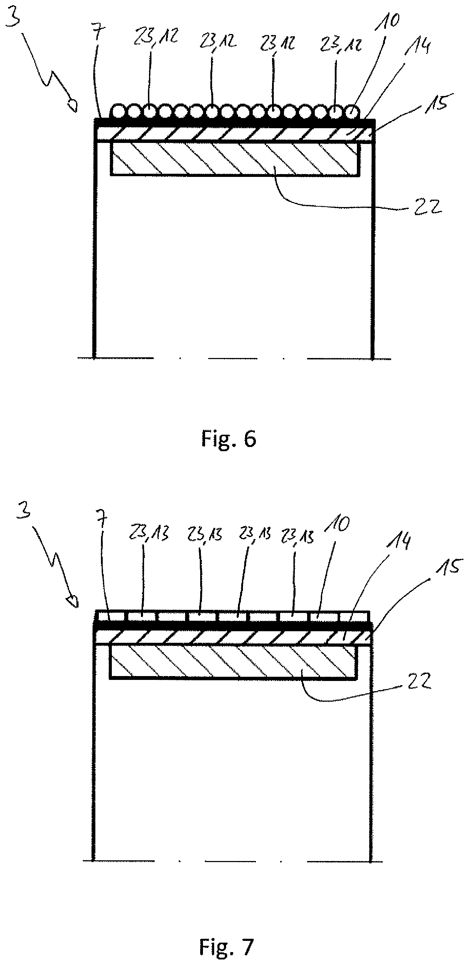

Fig 6 and 7 show respectively a sectional illustration in the region of the stator 3, of the damping layer 7 and of the structure 10, wherein explicitly different embodiment variants of the structure 10 are featured.

In Fig. 6 the structure 10 is configured as a metallic wire 12 with a circular cross-section, wound around the damping layer 7. The windings 23 of the structure 10 are configured so as to be single-layered and are axially directly in contact with one another.

In Fig. 7 the structure 10 is configured as a metallic strip 13 with a rectangular cross-section, wound around the damping layer 7. The cross-section of the structure 10 can have substantially all conceivable geometric shapes. The windings 23 of the structure 10 are configured so as to be single-layered as in Fig. 6, and are likewise axially directly in contact with one another. The number of windings 23 can vary according to the width of the metallic wire 12 or of the metallic strip 13, with constant dimensions of the stator 3.

## Claims

1. An electric motor (1), in particular for a motor vehicle (2), comprising:
- an external stator (3), which is formed cylindrically on its radial outer side (6),
- an internal rotor (4), which is arranged rotatably relative to the stator (3) about a rotation axis (5),
**characterized in that**
- the stator (3) at least partially on its radial outer side (6) is directly in contact with a damping layer (7),
- the damping layer (7) surrounds the stator (3) on its outer side (6) in circumferential direction (8),
- the damping layer (7) at least partially on its radial outer side (9) is directly in contact with a structure (10), which winds around the damping layer (7) in circumferential direction (8).

2. The electric motor according to Claim 1,
**characterized in that**
- the radial outer side (6) of the stator (3) has at least one longitudinal portion (11) in axial direction, which is surrounded by such a damping layer (7),
- at least one such longitudinal portion (11) on the radial outer side (9) of the damping layer (7) is wound around in axial direction by the structure (10).

3. The electric motor according to Claim 1 or 2,
**characterized in that**
- the damping layer (7) extends in axial direction substantially over the entire radial outer side (6) of the stator (3), and/or
- the structure (10) extends at least partially or completely in axial direction substantially over the entire radial outer side (9) of the damping layer (7).

4. The electric motor according to one of Claims 1 to 3,
**characterized in that**
the damping layer (7) has a material with a higher self-damping characteristic compared to the material of the stator, in particular a greater logarithmic decrement.

5. The electric motor according to one of Claims 1 to 4,
**characterized in that**
the damping layer (7) is formed from a viscoelastic material.

6. The electric motor according to one of Claims 1 to 5,
**characterized in that**
the damping layer (7) has several layers, formed from different viscoelastic materials, and these layers are connected with one another in a sandwich-like manner.

7. The electric motor according to one of Claims 1 to 6,
**characterized in that**
the structure (10) is formed by at least one winding (23), which is arranged or respectively wound on the radial outer side (9) of the damping layer (7).

8. The electric motor according to Claim 7,
**characterized in that**
the structure (10) is configured such that a winding number and a prestressing of the winding (23) are selected relative to a geometric dimension and to an oscillation behaviour of the electric motor (1).

9. The electric motor according to one of Claims 1 to 8,
**characterized in that**
the structure (10) is configured such that it is wound securely on the damping layer (7), so that the damping layer (7) is prestressed radially on the stator (3).

10. The electric motor according to one of Claims 1 to 9,
**characterized in that**
the structure (10) is formed from a material with a higher strength or respectively with a lower self-damping characteristic, compared to the damping layer (7), in particular from a metallic material.

11. The electric motor according to one of Claims 1 to 10,
**characterized in that**
the structure (10) is configured as a metallic wire (12) with a circular cross-section, wound around the damping layer (7).

12. The electric motor according to one of Claims 1 to 10,
**characterized in that**
the structure (10) is configured as a metallic strip (13) with a rectangular or square cross-section, wound around the damping layer (7).

13. The electric motor according to Claim 7 or 8, and 11 or 12,
**characterized in that**
the winding (23) of the structure (10) is configured so as to be single-layered, and the individual windings (23) of the structure (10) are axially directly in contact with one another or are arranged axially spaced apart from one another.

14. The electric motor according to one of Claims 1 to 13,
**characterized in that**
a housing (15) acting as yoke (14) surrounds the external stator (3) in circumferential direction (8) or respectively the housing (15) acting as yoke (14) at least partially forms the stator (3).

15. An electric machine (16),
**characterized in that**
the electric machine (16) has at least one such electric motor (1) which is configured according to one of the previously described claims.
